# EUROPEAN PATENT APPLICATION

(11) **EP 1 796 000 A1**
(43) Date of publication of application: **13.06.2007**
(21) Application number: 05111734.9
(22) Date of filing: 06.12.2005
(51) Int. Cl.: G06F 9/445

(54) **Method, system and computer program for distributing software products in trial mode**

(71) Applicant: International Business Machines Corporation, Armonk, NY 10504 (US)
(72) Inventor: Secchi, Marco, 00125 Roma (IT); Celli, Massimilian, 04100 Latina (IT); Pichetti, Luigi, 00152 Roma (IT)
(74) Representative: Zerbi, Guido Maria

(57) **Abstract**

A solution (300) for distributing software products in trial mode is proposed. This solution is based on the idea of leveraging a software distribution infrastructure. For this purpose, a trial software package (identified by a specific attribute) is provided (306-309) for any software product to be distributed in the trial mode. The trial software package is deployed (318-321) and applied (324-330) as usual to install the software product. An additional service of the software distribution infrastructure monitors (333-339) the reaching of an expiration term of the software product (defined in another attribute of the corresponding trial software package). When this expiration term is reached, the trial software package is applied again (342-345) so as to remove the software product temporarily. If a license for the same software product is bought later on (354), a corresponding activation software package is deployed (354-360) and applied (363). The activation software package in turn invokes the application of the trial software package (369-372), so as to restore the software product permanently.

## Description

### Field of the Invention

The present invention relates to the information technology field. More specifically, the invention relates to the distribution of software products.

### Background Art

Software products play a key role in modern data processing systems. For this purpose, a wide range of software products is available, spanning from simple personal utilities to complex enterprise applications. The corresponding market is very dynamic, with a huge number of new software products or new versions thereof that are continuously delivered.

In this arena, the competition among distributors of software products is very tough. Therefore, different marketing strategies have been developed in an attempt to improve the sales volumes. Particularly, a common strategy is of offering a software product in trial mode, wherein it can be used free of charge for a limited period; in this way, any potential customer is allowed to evaluate the software product (for example, its suitability or performance) without obligation. At the termination of this evaluation period, operation of the software product is automatically disabled (so as to prevent its unauthorized use). At any time, each customer may decide to buy one or more licenses for the unlimited use of the software product. As a result, if the evaluation period has already terminated the software product is activated again; in any case, its time limitation is removed so as to make operation of the software product permanent (possibly subjected to any specific conditions of use).

For this purpose, the distributor must provide the software product itself with all the logic that is required to manage the above-described trial mode. Particularly, dedicated code must be embedded to handle any possible situation that may occur; for example, this additional code should be able to monitor the evaluation period, to send warning messages at the approaching of its termination, to activate the software product when the corresponding license is bought, to make operation of the software product permanent, and the like.

However, this approach is very invasive since it requires updating the software product directly. Moreover, the distributors must develop a different solution for each software product. The operation is then time consuming and prone to errors; in any case, the updated software product (including the additional code for managing the trial mode) must always be tested again before its release.

It should also be noted that the solution described above is not of general applicability. For example, when the software product consists of a small number of files or objects it is unfeasible to add the code required for managing the trial mode. In any case, since the software products can be updated by their distributors only, it is not possible to provide software products in the trial mode if they do not support this feature natively.

In addition, the termination of the evaluation period must be verified whenever the software product is launched. Therefore, this operation may adversely affect the performance of the whole system, especially when the software product is continually invoked with a very high frequency.

The above-mentioned drawbacks arise irrespectively of how the software products have been delivered. For example, the software products (in the trial mode) may be downloaded from a web site in the Internet, may be enclosed with a magazine, may be offered at a fair stand, and the like. Alternatively, the software products may be deployed automatically from a central site to multiple endpoints by means of a software distribution infrastructure, such as based on the "IBM Tivoli Configuration Manager" (ITCM) by IBM Corporation.

### Summary of the Invention

The present invention provides a solution as set out in the independent claims. Advantageous embodiments of the invention are described in the dependent claims.

In principle, the invention is based on the idea of leveraging a software distribution service for providing software products subjected to expiration conditions.

Particularly, an aspect of the invention proposes a method for distributing software products in a data processing system. The method starts with the step of deploying a main (or trial) software package for a software product; the main software package is deployed from a source entity (such as a gateway) to a set of one or more target entities of the system (such as multiple endpoints). The main software package is applied in an installing mode on each target entity, so as to install the software product. The method then involves monitoring the fulfillment of an expiration condition for the software product on each target entity by an agent. In response to the fulfillment of the expiration condition, the main software package is applied in a disabling mode on the target entity so as to disable the software product reversibly.

Typically, the trial software package is applied later on in a restoring mode (so as to restore the disabled software product).

In a preferred embodiment of the invention, this result is achieved by means of an auxiliary (activation) software package.

A suggest implementation involves the addition of a control flag to the software packages, which control flag is used to enable or disable the above-described monitoring.

Advantageously, the expiration condition is set to the termination of an evaluation period (after the installation), which is specified in the trial software package too.

As a further enhancement, the monitoring is performed according to a frequency depending on the evaluation period.

In an embodiment of the invention, the disabled software product is deleted in response to a cleanup request.

A way to further improve the solution is of performing the operation after a cleanup delay (from the disabling), which is set according to the evaluation period.

Another aspect of the invention proposes a computer program for performing the method.

A further aspect of the invention proposes a corresponding system.

### Reference to the drawings

The invention itself, as well as further features and the advantages thereof, will be best understood with reference to the following detailed description, given purely by way of a non-restrictive indication, to be read in conjunction with the accompanying drawings, in which:
Figure 1a is a schematic block diagram of a data processing system in which the solution according to an embodiment of the invention is applicable;
Figure 1b shows the functional blocks of an exemplary computer of the system;
Figure 2 depicts the main software components that can be used for implementing the solution according to an embodiment of the invention; and
Figures 3a-3b show a diagram describing the flow of activities relating to an implementation of the solution according to an embodiment of the invention.

### Detailed Description

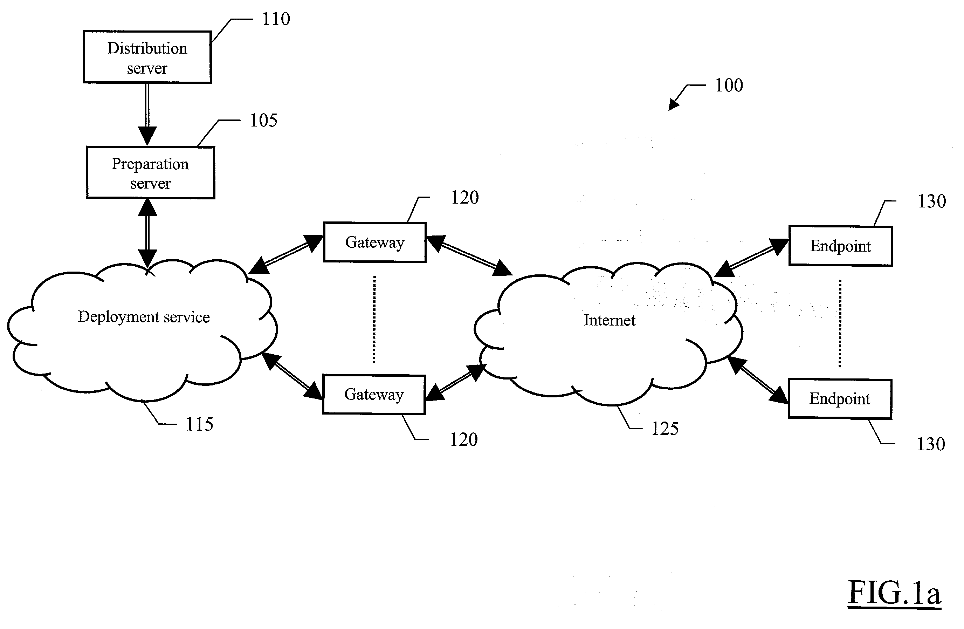

With reference in particular to Figure 1a, a data processing system 100 with distributed architecture is illustrated.

The system 100 implements a software distribution infrastructure (for example, based on the above-mentioned ITCM). Particularly, a preparation server 105 operates as a central site for defining and testing software packages to be used for enforcing desired software configurations; generally, the software packages allow installing, upgrading, configuring, or removing software products (such as application programs).

A distribution server 110 controls the actual software distribution process. Particularly, the distribution server 110 deploys selected software packages from the preparation server 105 (acting as a source host that provides the required software packages) by means of a deployment service 115 (for example, consisting of the "Multiplexed Distribution or MDIST2" service based on the "Tivoli Management Framework or TMF" by IBM Corporation). The software packages may be directly provided (in push mode) to endpoints of the software distribution process, wherein they are applied so as to enforce the desired software configurations; this result is achieved operating in a disconnected mode (wherein a set of software packages is deployed to selected endpoints according to a predefined plan) or in response to specific requests entered through a command line interface (CLI).

Moreover, as shown in the figure, the software packages may be provided to gateways 120, which publish them for authorized users (or groups of users). For this purpose, the gateways 120 act as web servers in the Internet 125; the authorized users access the gateways 120 (through the Internet 125) by means of corresponding endpoints 130 (acting as clients); in this way, the desired software packages may by downloaded (in pull mode) from the gateways 120 and then applied onto the endpoints 130.

The above-described structure strongly facilitates the process of deploying the software products (especially when the system 100 includes a high number of endpoints 130); moreover, all the operations can be controlled centrally from the distribution server 110. An example of such software distribution infrastructure (and particularly of the supported software packages) is described in WO-A-003085513, the entire disclosure of which is herein incorporated by reference.

Generally, each software package (also known as software package block, or SPB) starts with a header including different attributes of the software package, such as its name, version, and the like. The software package then includes an action section that defines actions, possibly conditioned to run-time parameters, to be executed for enforcing the desired software configuration; moreover, the software package includes a data section that contains an image of any required resources (such as executable modules, configuration files, databases, icons, and the like).

The application of the software package on each endpoint involves the execution of the corresponding actions, so as to reach a desired target state of the software package; for example, the software package may be applied in an "Installed" mode (to install the corresponding software product) or in a "Removed" mode (to remove the same software product). Moreover, it is also possible to specify that the application of the software package is in a "Committed" mode (when it cannot be reversed) or in an "Undoable" mode (when it is possible to restore the situation preceding its application); for example, the "Installed undoable" mode is commonly used when a software product is upgraded (such as to a new version). In this situation, the application of the software package may be reversed later on (for example, because of any failure) by applying it in an "Undo" mode; conversely, the application of the software package is made permanent (for example, after a successful test of the new version of the software product) by its application in an "Accept" mode.

In the solution according to an embodiment of the invention, the software distribution infrastructure is also used to provide the software products in trial mode (for example, for their free evaluation during a limited period). For this purpose, two new attributes are added to the header of the software packages. Particularly, an attribute "TrialFlag" consists of a flag of the Boolean type, which is asserted (i.e., "True") when the corresponding software product must be distributed in the trial mode. Another attribute "Eval" indicates the length of an evaluation period (during which the software product can be used for free); typically, the attribute "Eval" is an integer that provides the number of days of the evaluation period after the installation of the software product.

The software distribution infrastructure controls the installation of each software product to be distributed in the trial mode as usual, by means of a corresponding software package with the attributes "TrialFlag" and "Eval" accordingly set (hereinafter referred to as trial software package). As described in detail in the following, a service of the same software distribution infrastructure periodically checks whether each software product in the trial mode has reached an expiration term, which is defined by the termination of the evaluation period after the application of the corresponding trial software package. If so, the trial software package is applied again so as to disable the software product. The software product may however be activated again later on by means of a further software package (hereinafter referred to as activation software package); the activation software package includes a new activation action, which causes the application of the same trial software package so as to restore the corresponding software product.

The proposed technique does not require any update of the software products (with the same solution that apply to all the software products to be provided in the trial mode). Therefore, no ad-hoc code must be developed for this purpose by the distributors of the different software products; this allows saving time and avoiding possible errors (without the need of any additional test of the software products).

The above-described solution is of general applicability. Particularly, it is now possible to provide any kind of software products in the trial mode; for example, this applies to very simple software products as well (where the embedding of any additional code would be untenable).

It should also be noted that the termination of the evaluation periods can be verified independently of the use of the software products. Therefore, it is possible to reduce the impact on the performance of the system to the minimum (for example, by executing the operation during an idle period).

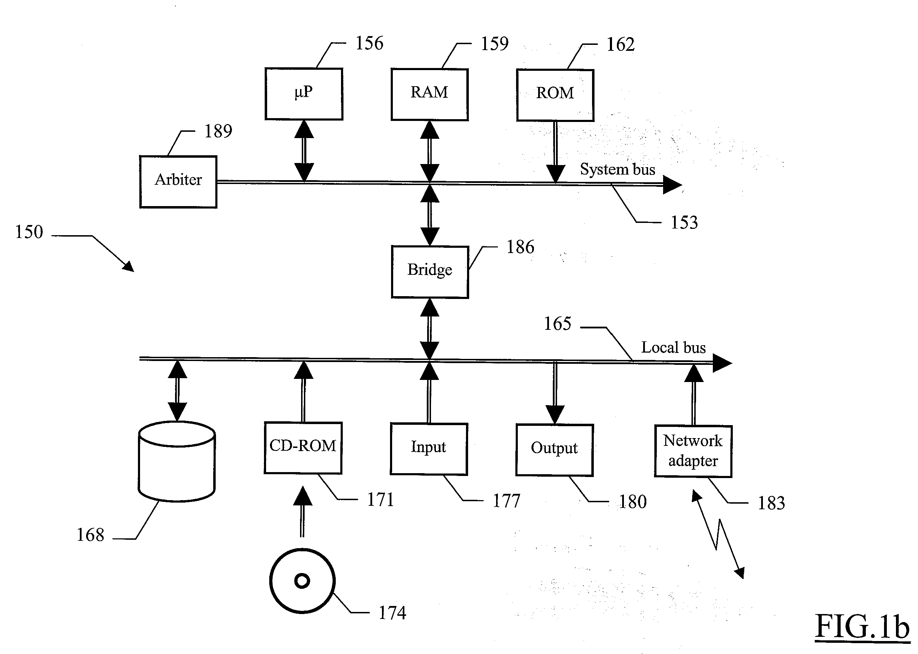

As shown in Figure 1b, a generic computer of the system (preparation server, distribution server, gateway, or endpoint) is denoted with 150. The computer 150 is formed by several units that are connected in parallel to a system bus 153 (with a structure that is suitably scaled according to the actual function of the computer 150 in the above-described system). In detail, one or more microprocessors (µP) 156 control operation of the computer 150; a RAM 159 is directly used as a working memory by the microprocessors 156, and a ROM 162 stores basic code for a bootstrap of the computer 150. Peripheral units are clustered around a local bus 165 (by means of respective interfaces). Particularly, a mass memory consists of a hard-disk 168 and a drive 171 for reading CD-ROMs 174. Moreover, the computer 150 includes input devices 177 (for example, a keyboard and a mouse), and output devices 180 (for example, a monitor and a printer). An adapter 183 is used to connect the computer 150 to a network. A bridge unit 186 interfaces the system bus 153 with the local bus 165. Each microprocessor 156 and the bridge unit 186 can operate as master agents requesting an access to the system bus 153 for transmitting information. An arbiter 189 manages the granting of the access with mutual exclusion to the system bus 153.

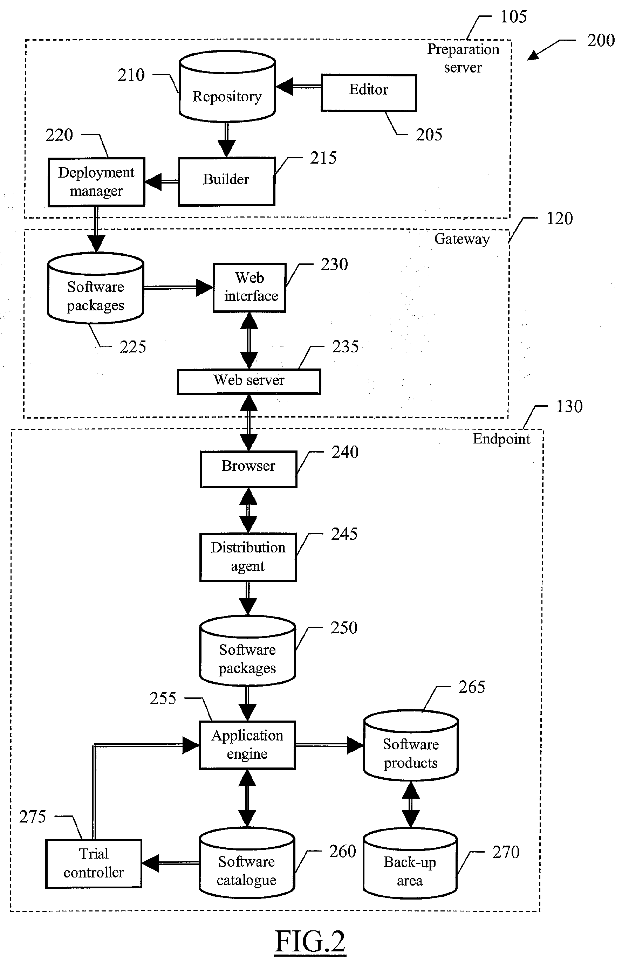

Moving now to Figure 2, the main software components that run on the above-described system are denoted as a whole with the reference 200. The information (programs and data) is typically stored on the hard-disk and loaded (at least partially) into the working memory of each computer when the programs are running, together with an operating system and other application programs (not shown in the figure). The programs are initially installed onto the hard disk, for example, from CD-ROM.

With reference in particular to the preparation server 105, an editor 205 provides a Graphical User Interface (GUI) for defining the software packages. The software packages so obtained, or their definition together with the corresponding resource images, are saved into a repository 210; the repository 210 may also be used to store software packages that are provided (already complete for their distribution) by third parties. In the example at issue, for each software product to be distributed in the trial mode the repository 210 will include the corresponding trial software package (for its installation/removal) and activation software package (for its restoring). The repository 210 is accessed by a builder 215, which retrieves or dynamically generates selected software packages. A deployment manager 220 (under the control of the distribution server) makes those software packages available to the deployment service (for their distribution to the different gateways).

All the software packages that have been provided to a generic gateway 120 are saved into a global repository 225. The global repository 225 is accessed by a web interface 230, which controls the downloading of the software packages onto the different endpoints; in the example at issue, the web interface 230 consists of the "WebUI" service of the ITCM. For this purpose, the web interface 230 implements a number of functions, such as for authenticating each user of the endpoints and verifying their authorizations, for fulfilling any submitted request, for synchronizing each endpoint with a selected reference model that defines a target software configuration, for approving the execution of the operations involved by the application of any software package, and the like. The web interface 230 is accessible in the Internet through a web server 235, which provides all the required basic services.

Considering now a generic endpoint 130, a browser 240 is used to surf through the Internet (and in particular to access the different gateways). The browser 240 interfaces with a distribution agent 245, which controls the software distribution process locally. Particularly, the distribution agent 245 saves all the software packages that have been downloaded from the gateways into a local repository 250; each software package in the repository 250 is associated with the corresponding desired target state.

The local repository 250 is accessed by an application engine 255 (such as the "Software Installation Engine or SIE" service of the ITCM), which enforces their application on the endpoint 130. The application engine 255 also controls a software catalogue 260, which stores information about each software package that was applied on the endpoint 130 (such as its current state, application timestamp, and the like); in addition, in an embodiment of the invention each entry of the software catalogue 260 saves the attributes "TrialFlag" and "Eval" of the corresponding software package. For each software package (in the local repository 250) that is not yet in the desired target state (as indicated in the software catalogue 260), the application engine 255 causes the execution of the corresponding actions required to reach this target state, and then updates the software catalogue 260 according to the result of the operation.

Particularly, when generic software packages built for distributing corresponding software products (either in the standard mode or in the trial mode) are applied in the "Installed" mode, those software products are installed onto the endpoint 130 (where they are denoted as a whole with the reference 265). Particularly, each software product 265 installed on the endpoint 130 includes the corresponding resources; the software product 265 also includes any configuration options, possibly customized by a user of the endpoint 130 (such as the number of a listening port, the name of a remote host, and the like). Conversely, when the same software packages are applied in the "Removed" mode, the corresponding software products 265 are removed from the endpoint 130. Whenever the application of the software packages is in the "Undoable" mode, the application engine 255 also makes a back-up copy in a dedicated area 270 of the objects (i.e., resources and/or configuration options) of the corresponding software products 265 that must be updated ("Installed undoable" mode) or deleted ("Removed undoable" mode). If one of those software packages (registered in the catalogue 260) is applied again later on in the "Undo" mode, the updated/deleted objects are restored from the back-up repository 270 (so as to return to the situation before the software packages were applied in the "Installed" mode or in the "Removed" mode); conversely, when the same software packages are applied again in the "Accept" mode, the corresponding objects in the back-up repository 270 are deleted permanently.

In the solution according to an embodiment of the invention, a trial controller 275 is added. The trial controller 275 accesses the software catalogue 260 (for example, periodically). For each software product 265 that has been installed (corresponding software package "Installed") in the trial mode (attribute "TrialFlag" asserted), the trial controller 275 verifies whether the associated expiration term has been reached (according to the installation timestamp of the trial software package and the evaluation period specified in the attribute "Eval"). If so, the trial controller 275 instructs the application engine 255 to disable that software product 265; for this purpose, the application engine 255 applies the corresponding trial software package again in the "Removed undoable" mode.

Moreover, whenever an activation software package is downloaded (from the gateway 120), it is applied on the endpoint 130 as usual, so as to cause the execution of its activation action. The activation action is defined by a pair of parameters, which identify a specific trial software package by means of its name and version. The execution of the activation action in turn causes the application of this trial software package in the "Undo" mode, so as to restore the corresponding software product (if it is necessary); particularly, this operation results in the reloading of its objects (resources and/or configuration options) from the back-up repository 270. In any case, the application engine 255 also deasserts the attribute "TrialFlag" of the trial software package in the software catalogue 260; in this way, the installation of the software product on the endpoint 130 is made permanent.

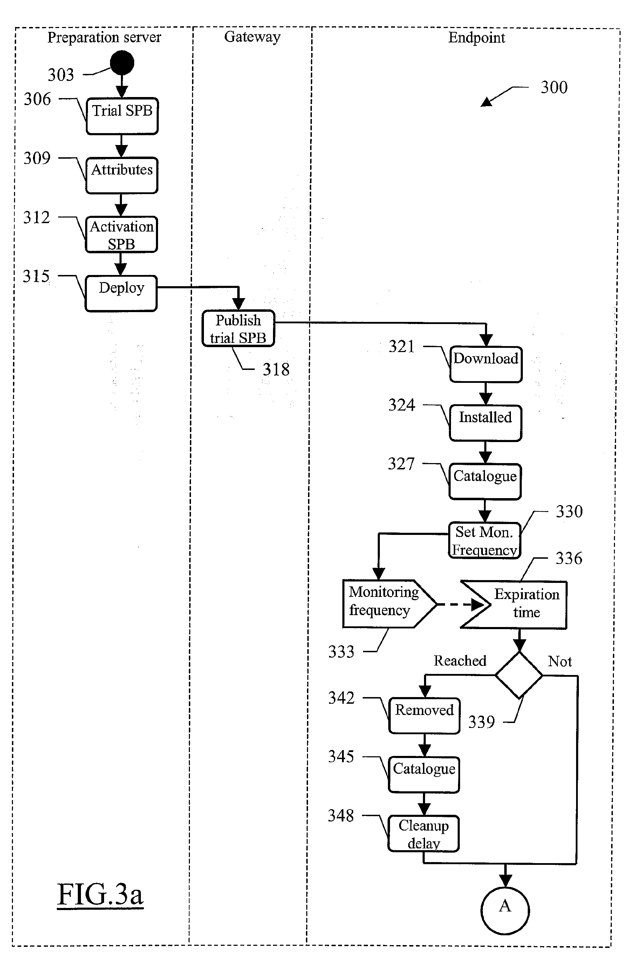

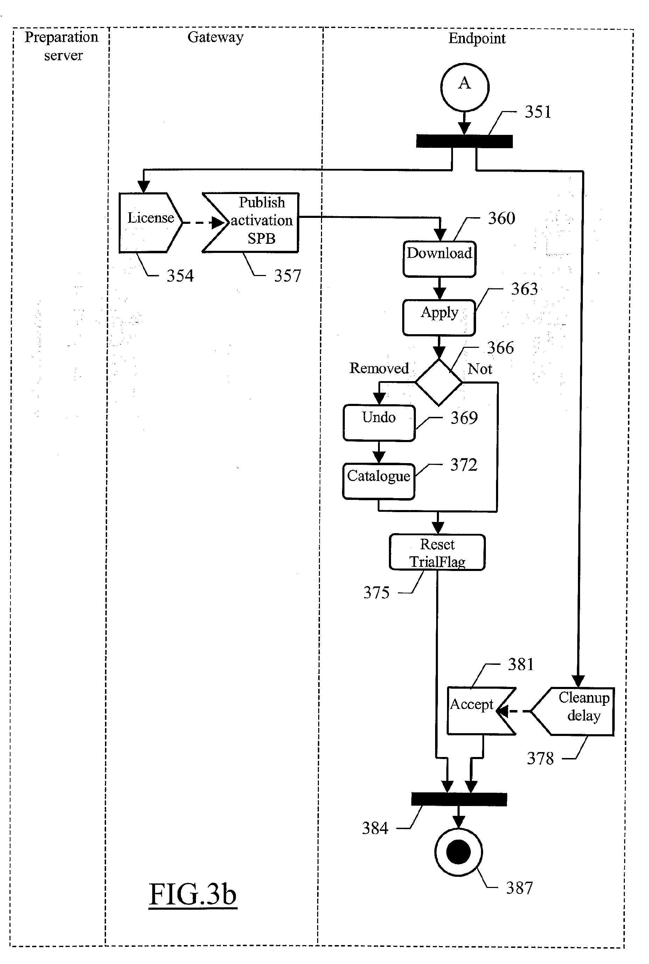

As shown in Figures 3a-3b, the logic flow of an exemplary process that can be implemented in the above-described system to distribute a generic software product in the trial mode is represented with a method 300. The method 300 starts at block 303 in the swimlane of the preparation server. Continuing to block 306, a solution model engineer creates the trial software package that is required to distribute the desired software product in the trial mode. The method 300 then passes to block 309, wherein the solution model engineer asserts the corresponding attribute "TrialFlag" (to qualify the trial software package); at the same time, the solution model engineer sets the attribute "Eval" to the desired length of the evaluation period (for example, 10-30 days). With reference now to block 312, the solution model engineer creates the corresponding activation software package (with its activation action that identifies the trial software package at issue). Both the trial software package and the activation software package are now deployed from the preparation server to the desired gateways (under the control of the distribution server) at block 315.

In this respect, it should be noted that by default the attribute "TrialFlag" is deasserted (i.e., "False") so that the proposed solution is opaque to the standard distribution of the software products. Moreover, the provision of the attribute "Eval" makes it possible to set individually the length of the evaluation period of each software product in a very simple way.

Moving to the swim-lane of a generic gateway, a solution release engineer at block 318 publishes the trial software package (received from the preparation server) for the authorized users. Passing to block 321, one of those authorized users downloads the trial software package onto its endpoint. In response thereto, the trial software package is applied in the "Installed" mode at block 324 (so as to install the corresponding software product on the endpoint). The method 300 then continues to block 327, wherein an entry for the trial software package is added to the software catalogue (with its attributes "TrialFlag" and "Eval"); at the same time, the application timestamp and the current state of the trial software package (resulting from its application) are also added. Considering now block 330, a monitoring frequency of the trial software package (by the trial controller) is preferably set dynamically according to the evaluation period of the corresponding software product (specified in the attribute "Eval"); for example, the monitoring frequency is calculated as the inverse of a predefined percentage (for example, 2-15% and preferably 4-8%, such as 5%) of the evaluation period. In this way, the behavior of the trial controller self-adapts to the specific software products to be monitored.

Whenever a time-out corresponding to this monitoring frequency expires (block 333), the trial controller at block 336 verifies whether the expiration time of the software product as been reached; for this purpose, the trial controller calculates the difference between the current time (obtained from the operating system) and the installation timestamp of the corresponding trial software package (extracted from the software catalogue). The flow of activity then branches at block 339 according to the result of the verification. If this difference exceeds the evaluation period (specified in the attribute "Eval"), the method 300 descends into block 342; in this phase, the trial software package is applied again in the "Removed undoable" mode (so as to remove the software product temporarily from the endpoint, but maintaining its relevant objects in the back-up repository). The current state of the trial software package is updated accordingly at block 345 in the software catalogue; at the same time, the attribute "TrialFlag" is deasserted to stop the monitoring of the trial software package. In this way, any configuration options that have been customized by the user of the endpoint are maintained (for its next possible restoring).

Proceeding to block 348, a cleanup delay for making the removal of the software product permanent is preferably set dynamically and associated with the corresponding trial software package in the software catalogue. Typically, the cleanup delay is calculated according to the evaluation period of the software product (specified in the attribute "Eval"), such as equal to a predefined multiple thereof (for example, 1-5 and preferably 2-4, such as 3 times). The method 300 then continues to the synchronization bar 351; the same point is also reached from block 339 directly when the expiration time of the software product has not been reached yet (so that it is left unchanged).

The flow of activity now forks into two alternative branches. A first branch consists of blocks 354-375, and a second branch consists of blocks 378-381.

Particularly, if a license for the unlimited version of the software product is bought (block 354), the corresponding activation software package is published at block 357 only for the users who have paid the required fee. Passing to block 360, each one of those users downloads the activation software package onto its endpoint. In response thereto, the activation software package in applied at block 363 so as to cause the execution of its activation action. As a result, the process branches at block 366. If the trial software package identified in the activation action has already been applied in the "Removed" mode (after reaching the expiration time of the corresponding software product) the method descends into block 369; in this phase, the trial software package is applied again in the "Undo" mode (so as to restore the software product with its objects, including the configuration options, from the back-up repository). The current state of the trial software package is updated accordingly at block 372 in the software catalogue. The method 300 then continues to block 375; the same point is also reached from block 366 directly when the expiration time of the software product has not been reached yet (so that the software product is still installed). Considering now block 375, in any case the attribute "TrialFlag" of the trial software package is deasserted in the software catalogue, so as to make the installation of the software product permanent.

Alternatively, if a time-out defined by the cleanup delay expires before (block 378), the process proceeds to block 381. In this phase, the trial software package is applied in the "Accept" mode, so as to delete the corresponding software product (with its objects) permanently from the endpoint. In this way, it is possible to avoid wasting memory space for software products that are unlike to be restored any longer. Moreover, the possibility of setting dynamically the cleanup delay makes this feature self-adaptive (according to the different types of software products).

The two branches described above joint at the synchronization bar 384. The process then ends at the concentric white/black stop circles 387.

Naturally, in order to satisfy local and specific requirements, a person skilled in the art may apply to the solution described above many modifications and alterations. Particularly, although the present invention has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the invention may be incorporated in any other embodiment as a general matter of design choice.

For example, similar considerations apply if the system has a different architecture or includes equivalent units. Moreover, each computer may have another structure or may include similar elements (such as cache memories temporarily storing the programs or parts thereof to reduce the accesses to the mass memory during execution); in any case, it is possible to replace the computer with any code execution entity (such as a PDA, a mobile phone, and the like).

It should be readily apparent that the above-described trial mode is merely illustrative, with the solution of the invention that may be applied more generally to the distribution of any software products subjected to whatever use limitations.

Although in the preceding description reference has been made to a specific software distribution application, this is not to be intended as a limitation; moreover, even if the proposed mechanism is most naturally used in the above-described pull mode, nothing prevents its use in the alternative push mode. More generally, the service deployed by the software distribution infrastructure may also be controlled by any other provider (adapted to distribute the software products from a generic source entity to one or more target entities). Likewise, the trial software package may have any other structure, equivalent solutions (even centralized) may be used to monitor the termination of the evaluation period, or more generally the fulfillment of any other expiration condition of the software product. Moreover, different techniques may be used to disable the software product in a reversible manner; for example, nothing prevents the actual deletion of the software product from the endpoint (but maintaining the trial software package for its possible reinstallation), even if this would involve loosing any configuration options.

Similar considerations apply if the trial controller provides additional functionalities; for example, it is possible to implement a service that sends a warning message to the user of the endpoint whenever each software product in the trial mode is approaching its expiration term (for example, in a time window defined by a selected percentage of the corresponding evaluation period, such as 10-20%).

Alternatively, the software product may be restored in another way (for example, by means of a command that causes the application of the trial software package in the "Undo" mode directly), or the restoration may start a new evaluation period (i.e., without disabling the corresponding monitoring). In any case, this operation may be triggered by any other authorizing condition (such as the decision to make the software product available to a specific department after a test period).

Moreover, it is possible to use any equivalent activation action, or any other activation software package with a similar structure.

It should be readily apparent that the attribute "TrialFlag" is merely illustrative, with the same result that may be achieved using any other technique for differentiating the trial software packages from the standard ones (such as with different commands for their distribution).

Alternatively, the expiration term may be defined in different ways (for example, according to the actual usage of the software product).

The feature of setting the monitoring frequency dynamically is not strictly necessary and it may be omitted in some implementations; in this case, the monitoring frequency is predefined, possibly to a customizable value (such as once a day).

In a different embodiment of the invention, the cleanup delay may be defined statically for all the trial software packages (for example, every month). However, the use of a standard cleanup process (if any) for deleting the software products is contemplated.

Similar considerations apply if the program (which may be used to implement each embodiment of the invention) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibers, wireless connections, networks, broadcast waves, and the like; for example, the medium may be of the electronic, magnetic, optical, electromagnetic, infrared, or semiconductor type.

In any case, the solution according to the present invention lends itself to be carried out with a hardware structure (for example, integrated in a chip of semiconductor material), or with a combination of software and hardware.

## Claims

1. A method (300) for distributing software products in a data processing system (100), the method including the steps of:
deploying (318-321) a main software package for a software product from a source entity (120) to a set of target entities (130) of the system,
applying (324-327) the main software package in an installing mode on each target entity to install the software product,
monitoring (333-339) the fulfillment of an expiration condition for the software product on each target entity by an agent, and
in response to the fulfillment of the expiration condition, applying (342-345) the main software package in a disabling mode on the target entity to reversibly disable the software product.

2. The method (300) according to claim 1, in response to the fulfillment of an authorizing condition the method further including the steps for at least a selected one of the target entities of:
applying (363-372) the main software package in a restoring mode to restore the disabled software product, and
disabling (375) the monitoring.

3. The method (300) according to claim 2, further including the steps of:
deploying (354-360) an auxiliary software package for the main software package from the source entity to each selected target entity, and
applying (363-375) the auxiliary software package on the selected target entity to cause the application of the main software package in the restoring mode and the disabling of the monitoring.

4. The method (300) according to any claim from 1 to 3, wherein the main software package includes a control flag, the method further including the step of:
enabling or disabling (327) the monitoring according to the control flag.

5. The method (300) according to any claim from 1 to 4, wherein the main software package includes an indication of an evaluation period of the software product, the expiration condition consisting of the termination of the evaluation period after the application of the main software package in the installing mode.

6. The method (300) according to claim 5, wherein the step of monitoring (333-339) is performed according to a monitoring frequency, the method further including the step of:
setting (330) the monitoring frequency according to the evaluation period.

7. The method (300) according to any claim from 1 to 6, further including the step of:
deleting (378-381) the disabled software product in response to a cleanup request.

8. The method (300) according to claim 7 when dependent on claim 5 or 6, further including the steps of:
setting (348) a cleanup delay according to the evaluation period, and
issuing (378) the cleanup request after the cleanup delay from the application of the software package in the disabling mode.

9. A computer program (200) for performing the method (300) of any claim from 1 to 8 when the computer program is executed on a data processing system (100).

10. A system (100) including means (200) for performing the steps of the method (300) according to any claim from 1 to 8.
